# EUROPÄISCHE PATENTSCHRIFT

(11) **EP 2 673 534 B1**
(45) Veröffentlichungstag und Bekanntmachung des Hinweises auf die Patenterteilung: **12.08.2015**
(21) Anmeldenummer: 12704254.7
(22) Anmeldetag: 09.02.2012
(51) Int. Cl.: F16J 15/32

(54) **DICHTUNGSANORDNUNG**
SEALING ARRANGEMENT
ENSEMBLE D'ÉTANCHÉITÉ

(30) Priorität: 10.02.2011 DE 102011003915
(43) Veröffentlichungstag der Anmeldung: 18.12.2013
(73) Patentinhaber: Aktiebolaget SKF, 415 50 Göteborg (SE)
(72) Erfinder: MEYER, Wilhelm, 97453 Schonungen (DE); WOHLFEIL, Florian, 97464 Niederwerrn (DE)
(74) Vertreter: Schonecke, Mitja
(86) Internationale Anmeldenummer: PCT/EP2012/052157
(87) Internationale Veröffentlichungsnummer: WO 2012/107508

(56) Entgegenhaltungen:
- WO-A2-2007/014731
- WO-A2-2011/008898
- US-A- 3 612 546

## Beschreibung

Die Erfindung betrifft eine Dichtungsanordnung, die mindestens ein Dichtungselement umfasst, wobei das Dichtungselement mindestens eine Dichtlippe aufweist und wobei die mindestens eine Dichtlippe in reibendem Kontakt mit einem abzudichtenden Bauteil steht und wobei das abzudichtende Bauteil an der Kontaktstelle mit der Dichtlippe mit einer Beschichtung versehen ist, die aus einem ausgehärteten Klebstoff besteht.

Eine gattungsgemäße Dichtungsanordnung offenbart die WO 2011/008898 A2. Ähnliche bzw. andere Lösungen zeigen die WO 2007/014731 A2 und die US 3 612 546 A.

Bei vielen schleifenden Dichtungen, wie beispielsweise bei Radialwellendichtringen, steht die Dichtlippe in direktem berührendem Kontakt mit einer Welle bzw. Achse. Durch die sich drehende Welle und die stillstehende Dichtung (oder auch umgekehrt bei sich drehender Dichtung und stillstehender Welle bzw. Achse) kann es durch die auftretende Reibung zwischen den beiden Gleitpartnern zu Verschleiß kommen. Dies ist insbesondere bei relativ weichen Wellen bzw. Achsen der Fall, sowie auch bei anderen Anlaufteilen wie z. B. Gehäusen. Dies ruft verschleißbedingte Probleme hervor.

Um den abrasiven Verschleiß zu verhindern, werden teilweise gehärtete Hülsen (sog. "Speedisleeves") eingesetzt. Die Dichtlippe der Dichtung läuft dann auf dieser Hülse an und verschleißt demzufolge die Welle nicht.

Der Einsatz derartiger Hülsen hat aber auch verschiedene Nachteile zur Folge.

Beim Einsatz der dünnen Wellenschutzhülsen kann es durch Erwärmung zu Beeinflussungen der Sitzcharakteristik der Hülse auf der Welle und dann weiter über die Reibungskraft der Dichtlippe auf der Hülse zu Relativbewegungen zwischen Welle und Hülse kommen. Diese Relativbewegungen zwischen Hülse und Welle sind sehr unerwünscht.

Die Montage der genannten Hülse ist weiterhin mitunter sehr aufwendig, da die Hülse mit Übermaß auf der Welle sitzen soll, um einen festen Sitz zu gewährleisten. Da die in Rede stehenden Hülsen zumeist in gewissen axialen Normbreiten zur Verfügung stehen, ist es auch schwierig, ihre axiale Erstreckung genau an den Anwendungsfall anzupassen.

Der Erfindung liegt daher die Aufgabe zugrunde, eine Dichtungsanordnung der eingangs genannten Art so fortzubilden, dass einerseits die erwünschte Verschleißstabilität gegeben ist, dass andererseits aber auf die teilweise relativ aufwändigen Anlaufhülsen für die Dichtlippe verzichtet werden kann.

Die Lösung dieser Aufgabe durch die Erfindung ist dadurch gekennzeichnet, dass der Klebstoff auf das abzudichtende Bauteil aufgesprüht oder aufgestrichen ist und zumindest abschnittsweise eine hohlzylindrische Form aufweist.

Der Klebstoff kann mit Hartstoffpartikeln bzw. Hartstofffasern versehen sein, um die mechanische Festigkeit des Klebstoffs zu erhöhen. Die Hartstoffpartikel können aus Diamanten, aus Silizium-Karbid (SiC), aus Korund oder aus Bornitrid (CBN) bestehen. Die Hartstofffasern können Kohlenstofffasern oder Glasfasern sein.

Der Klebstoff kann ferner mit Additiven versehen sein, die die Oberflächenreibung herabsetzen. Hierbei ins bevorzugt daran gedacht, dass ein Additiv Polytetrafluorethylen ist oder diese Verbindung aufweist.

Die Dichtungsanordnung ist vorzugsweise als Radialwellendichtung ausgebildet. Das Bauteil kann eine rotierende Welle sein, die an der Kontaktstelle mit der Dichtlippe eine zylindrische Außenform aufweist.

Die Erfindung sieht also vor, dass anstelle einer Wellenschutzhülse eine verschleißfeste Klebstoffschicht auf die Welle aufgebracht wird. Der Klebstoff kann Hartstoffpartikel beinhalten, welche die Festigkeit der Beschichtung erhöhen. Evtl. kann der Klebstoff für niedrige Geschwindigkeiten zusätzlich noch reibungsmindernde Additive aufweisen, welche die Reibungswirkung und den Verschleiß der Dichtlippe herabsetzen. Die Dichtlippe läuft dann - wie auch im Falle der Wellenschutzhülse - nicht direkt auf der Welle, sondern auf der Klebstoffbeschichtung an. Dadurch wird der Einlauf der Dichtlippe verhindert und der Verschleiß herabgesetzt.

Die genannte Klebstoffbeschichtung kann zusammen mit der Dichtung als Dichtsystem konzipiert sein und bereits bei der Erstausrüstung einer Anordnung vorgesehen sein. Es ist aber auch möglich, im Rahmen einer Nachrüstung die Klebstoffbeschichtung einzusetzen; die vorgeschlagene Ausgestaltung kann also auch im Rahmen einer Reparatur appliziert werden.

Neben dem Verschleißschutz hat die erfindungsgemäße Beschichtung auch den Vorteil, einen Korrosionsschutz für die Welle zu bieten. Die Klebebeschichtung kann als Verschleißschutz durchaus auch bei nicht-rostenden Stählen (Niro-Stählen) eingesetzt werden, vor allem bei Einsatz im Nassbereich.

Je nach Bedarf kann die Dicke der Beschichtung variiert werden, so dass auch größere Maßtoleranzen für die Wellenfertigung im Bereich der Dichtungsauflage realisiert werden können.

Da die Beschichtung sehr flexibel aufgebracht werden kann, ist es in einfacher Weise möglich, die gewünschte axiale Breite der Beschichtung zu wählen. Die benötigte Breite der Beschichtung wird je nach Anwendung beliebig bestimmt. Im Falle des Einsatzes einer Hülse, wie im Stand der Technik, muss zumeist auf gewisse Standardmaße zurückgegriffen werden.

In der Zeichnung ist ein Ausführungsbeispiel der Erfindung dargestellt. Es zeigen:
- Fig. 1: schematisch den Radialschnitt durch eine Dichtungsanordnung mit der erfindungsgemäßen Beschichtung einer Welle und
- Fig. 2: die Einzelheit "X" in vergrößerter Darstellung.

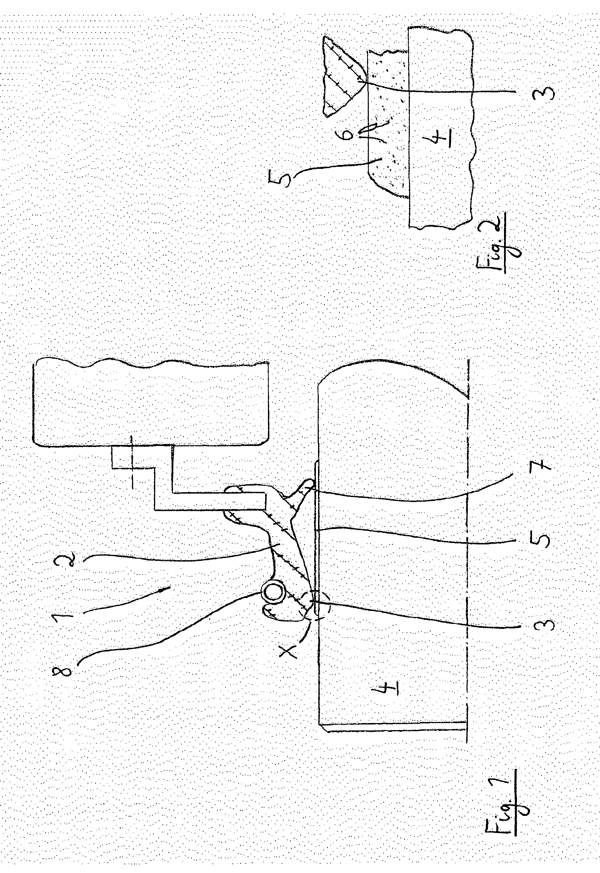

In Fig. 1 ist eine Dichtungsanordnung 1 skizziert, die ein Dichtungselement 2 aufweist. Das Dichtungselement 2 hat vorliegend zwei Dichtlippen, nämlich eine Hauptdichtlippe 3 und eine Staublippe 7. Beide Dichtlippen 3, 7 liegen reibend an einem Bauteil 4 in Form einer rotierenden Welle an. Die Dichtlippe 3 wird in bekannter Weise durch eine Ringfeder 8 radial gegen die Welle 4 gedrückt.

Um auf eine Anlaufhülse auf der Welle 4 verzichten zu können und dennoch in einfacher und kostengünstiger Weise verschleißbedingte Effekte beim Zusammenwirken zwischen Dichtlippe 3, 7 und Welle 4 zu vermindern, weist die abzudichtende Welle 4 zumindest an der Kontaktstelle mit der Dichtlippe 3, vorliegend aber auch an der Kontaktstelle mit der Dichtlippe 7 eine Beschichtung 5 auf. Bei dieser handelt es sich um eine ausgehärtete hohlzylindrische Schicht Klebstoff.

In den Klebstoff 5 können - wie es in Fig. 2 in der Vergrößerung schematisch dargestellt ist - Hartstoffpartikel 6 bzw. Hartstofffasern eingelagert sein, um die mechanische Stabilität des Klebstoffs 5 zu erhöhen.

Als Klebstoff wird beispielsweise ein chemisch härtender Klebstoff eingesetzt. Bei diesem Klebstoff (auch als Reaktionsklebstoff bezeichnet) werden die einzelnen chemischen Bausteine für den Klebstoff im entsprechenden Verhältnis zum Klebstoff gemischt; von diesem wird die in Fig. 1 skizzierte Schicht auf die Welle 4 aufgebracht, beispielsweise aufgesprüht oder aufgepinselt. Die Verfestigung erfolgt dann durch eine chemische Reaktion der Komponenten.

Bevorzugte Reaktionsklebstoffe sind als zwei- bzw. mehrkomponentige Klebstoffe ausgeführt. In den einzelnen Komponenten befindet sich die Monomere, d. h. die Grundbausteine des bei der Reaktion entstehenden Polymers. Eine der beiden Komponenten kann Harzmonomere (oder auch Binder) enthalten, während die andere Komponente Härter enthält. Als weitere Inhaltsstoffe der Zubereitungen können Stabilisatoren, Thixotropiermittel, Beschleuniger und weitere Additive zum Einsatz kommen.

Für besondere Anwendungsfälle werden auch Drei- oder Mehrkomponentenklebstoffe eingesetzt, die grundsätzlich bei der vorliegenden Erfindung auch eingesetzt werden können.

Vorteilhaft kann es auch sein, wenn die Aushärtung des Klebstoffs unter Ausschluss von Sauerstoff (also anaerob) erfolgt. Dabei härtet der Klebstoff nach einem Radikalketten-Mechanismus unter Ausschluss von Sauerstoff in Anwesenheit von Metallionen aus.

Es können generell auch Schmelzklebstoffe zum Einsatz kommen (auch als "Hotmelts" bezeichnet). Diese sind bei Raumtemperatur fest. Sie werden durch Aufschmelzen verarbeitbar, d. h. sie entfalten bei Erwärmung ihre adhäsive Wirkung. Die heiße Klebstoffschmelze wird auf die Welle 4 aufgetragen. Unmittelbar nach dem Abkühlen und Erstarren des Klebstoffs ist der Klebstoff fest und nicht mehr adhäsiv.

Weitere bevorzugte Klebstoffe, die vorteilhaft bei der vorliegenden Erfindung eingesetzt werden können, sind strahlenhärtende Klebstoffe. Bei diesen Klebstoffen, die als einkomponentige Systeme eingesetzt werden, härten durch radikalische Polymerisation zu festen Polymeren, wobei die Bildung der Startradikale durch Bestrahlung mit UV-Licht (oder anderen Strahlenquellen, wie z. B. Elektronen) hervorgerufen wird. Die Wellenlänge des UV-Lichts muss dabei genau auf das eingesetzte Klebstoffsystem abgestimmt sein. Die Aushärtung erfolgt durch Bestrahlen mit UV-Licht. Es sind hierbei mehrere Varianten möglich: Zunächst sind UV-Acrylate bekannt. Im flüssigen Zustand besteht ein radikalisch vernetzender UV-Klebstoff überwiegend aus Monomeren und Photoinitiatoren. In diesem Zustand lässt sich der Klebstoff leicht dosieren. Durch die Einwirkung von UV-Strahlung werden die Photoinitiatoren in freie Radikale gespalten. Diese Radikale leiten die Bildung von Polymerketten ein. Im ausgehärteten Zustand besteht der UV-Klebstoff aus vernetzten Polymerketten. Weiterhin können kationische Epoxies (Epoxidharze-Klebstoffe) zum Kleben von nicht transparenten Substraten eingesetzt werden. Im Unterschied zu den radikalisch härtenden Acrylatklebstoffen können die kationisch härtenden Klebstoffsysteme nach einer ausreichenden Aktivierung mit UV-Strahlung im Dunklen weiterhärten. Kationische Epoxies können für Anwendungen mit einem UV-durchlässigen Bauteil ebenso eingesetzt werden, wie für Anwendungen bei nicht UV-durchlässigen Werkstoffen. Bei Letzteren muss der Klebstoff nach dem Dosieren, jedoch vor dem Fügen mit UV-Strahlung aktiviert werden.

Für die vorgeschlagene Konzeption kann ein Klebstoff auf Basis von Polyurethanen, Epoxidharzen oder Acrylaten verwendet werden. Dabei schließt der Begriff "Acrylat" substituierte Acrylate wie Methacrylat ein.

Beispiele von Klebstoffen, die sich auch bewährt haben, sind so genannte "reaktive Schmelzklebstoffe". Diese sind in geschmolzenen Zustand streichfähig, so dass sie in diesem Zustand auf die Welle 4 aufgebracht werden können, ohne dass der Aushärtungs-Mechanismus aktiviert wird. Dieser erfordert vielmehr ein Erwärmen auf eine höher liegende Aktivierungstemperatur, bei der ein latenter Härter für eine rektionsfähige Bindemittel-Komponente (beispielsweise ein Präpolymer mit Epoxid- oder Isocyanat-Gruppen) aktiviert wird.

Es wird hierzu exemplarisch auf die EP 0 354 498 A2 hingewiesen, wo hierzu nähere Angaben zu finden sind.

Der Klebstoff enthält eine Harzkomponente, mindestens einen thermisch aktivierbaren latenten Härter für die Harzkomponente sowie ggf. Beschleuniger, Füllstoffe, Thixotropiehilfsmittel und weitere übliche Zusatzstoffe, wobei die Harzkomponente durch Umsetzung von einem beim Raumtemperatur festen Epoxidharz, einem bei Raumtemperatur flüssigen Epoxidharz und einem linearen Polyoxypropylen mit Amino-Endgruppen erhältlich ist. Die Epoxidharze werden in einer solchen Menge, bezogen auf das Polyoxypropylen mit Amino-Endgruppen, eingesetzt, dass ein Überschuss an Epoxidgruppen, bezogen auf die Aminogruppen, gewährleistet ist. Als latenter Härter ist beispielsweise Dicyandiamid geeignet.

Speziellere Ausführungsformen für einen brauchbaren Klebstoff, mit dem sich die Umsetzung der vorliegenden Erfindung ermöglicht, sind auch in der WO 93/00381 offenbart.

Weiterhin können Epoxidharz-Strukturklebstoffe eingesetzt werden, wie sie beispielsweise in der WO 00/37554 näher beschrieben sind.

Hierbei handelt es sich um Zusammensetzungen, die ein Copolymeres mit mindestens einer Glasübergangstemperatur von -30 °C oder niedriger und gegenüber Epoxiden reaktiven Gruppen oder ein Reaktionsprodukt dieses Copolymeren mit einem Polyepoxid, weiterhin ein Reaktionsprodukt aus einem Polyurethan-Prepolymer und einem Polyphenol oder Aminophenol sowie schließlich mindestens ein Epoxidharz enthalten. Um diese Zusammensetzungen wärmehärtbar zu machen, enthalten sie zusätzlich einen latenten Härter aus der Gruppe Dicyandiamid, Guanamine, Guanidine, Aminoguanidine, feste aromatische Diamine und/oder Härtungsbeschleuniger. Zusätzlich können sie Weichmacher, Reaktiwerdünner, Rheologie- Hilfsmittel, Füllstoffe, Netzmittel und/oder Alterungsschutzmittel und/oder Stabilisatoren enthalten.

### Bezugszeichenliste

- 1: Dichtungsanordnung
- 2: Dichtungselement
- 3: Dichtlippe
- 4: Bauteil (Welle)
- 5: Beschichtung (Klebstoff)
- 6: Hartstoffpartikel
- 7: Staublippe
- 8: Ringfeder

## Patentansprüche

1. Dichtungsanordnung (1), die mindestens ein Dichtungselement (2) umfasst, wobei das Dichtungselement (2) mindestens eine Dichtlippe (3) aufweist, wobei die mindestens eine Dichtlippe (3) in reibendem Kontakt mit einem abzudichtenden Bauteil (4) steht und wobei das abzudichtende Bauteil (4) an der Kontaktstelle mit der Dichtlippe (3) mit einer Beschichtung (5) versehen ist, die aus einem ausgehärteten Klebstoff besteht,
**dadurch gekennzeichnet,**
**dass** der Klebstoff (5) auf das abzudichtende Bauteil (4) aufgesprüht oder aufgestrichen ist und zumindest abschnittsweise eine hohlzylindrische Form aufweist.

2. Dichtungsanordnung nach Anspruch 1, **dadurch gekennzeichnet, dass** der Klebstoff (5) mit Hartstoffpartikeln (6) bzw. Hartstofffasern versehen ist, um die mechanische Festigkeit des Klebstoffs (5) zu erhöhen.

3. Dichtungsanordnung nach Anspruch 2, **dadurch gekennzeichnet, dass** die Hartstoffpartikel (6) aus Diamanten, aus Silizium-Karbid (SiC), aus Korund oder aus Bornitrid (CBN) bestehen.

4. Dichtungsanordnung nach Anspruch 2, **dadurch gekennzeichnet, dass** die Hartstofffasern Kohlenstofffasern oder Glasfasern sind.

5. Dichtungsanordnung nach einem der Ansprüche 1 bis 4, **dadurch gekennzeichnet, dass** der Klebstoff (5) mit Additiven versehen ist, die die Oberflächenreibung herabsetzen.

6. Dichtungsanordnung nach Anspruch 5, **dadurch gekennzeichnet, dass** zumindest ein Additiv Polytetrafluorethylen ist oder diese Verbindung aufweist.

7. Dichtungsanordnung nach einem der Ansprüche 1 bis 6, **dadurch gekennzeichnet, dass** sie als Radialwellendichtung ausgebildet ist.

8. Dichtungsanordnung nach einem der Ansprüche 1 bis 7, **dadurch gekennzeichnet, dass** das Bauteil (4) eine rotierende Welle ist, die an der Kontaktstelle mit der Dichtlippe (3) eine zylindrische Außenform aufweist.

## Claims

1. Seal arrangement (1) which comprises at least one seal element (2), the seal element (2) having at least one sealing lip (3), the at least one sealing lip (3) being in rubbing contact with a component (4) to be sealed, and the component (4) to be sealed being provided with a coating (5) at the contact point with the sealing lip (3), which coating (5) is composed of a cured adhesive, **characterized in that** the adhesive (5) is sprayed or painted onto the component (4) to be sealed and has a hollow-cylindrical shape at least in portions.

2. Seal arrangement according to Claim 1, **characterized in that** the adhesive (5) is provided with hard material particles (6) or hard material fibres, in order to increase the mechanical strength of the adhesive (5).

3. Seal arrangement according to Claim 2, **characterized in that** the hard material particles (6) consist of diamonds, of silicon carbide (SiC), of corundum or of boron nitride (CBN).

4. Seal arrangement according to Claim 2, **characterized in that** the hard material fibres are carbon fibres or glass fibres.

5. Seal arrangement according to one of Claims 1 to 4, **characterized in that** the adhesive (5) is provided with additives which reduce the surface friction.

6. Seal arrangement according to Claim 5, **characterized in that** at least one additive is polytetrafluoroethylene or has the said compound.

7. Seal arrangement according to one of Claims 1 to 6, **characterized in that** it is configured as a radial shaft seal.

8. Seal arrangement according to one of Claims 1 to 7, **characterized in that** the component (4) is a rotating shaft which has a cylindrical outer shape at the contact point with the sealing lip (3).

## Revendications

1. Agencement d'étanchéification (1) comprenant au moins un élément d'étanchéification (2), l'élément d'étanchéification (2) présentant au moins une lèvre d'étanchéité (3), l'au moins une lèvre d'étanchéité (3) étant en contact de friction avec un composant à étanchéifier (4) et le composant à étanchéifier (4) étant pourvu, au niveau du point de contact avec la lèvre d'étanchéité (3), d'un revêtement (5) constitué d'un adhésif durci,
**caractérisé en ce que**
l'adhésif (5) est pulvérisé ou enduit sur le composant à étanchéifier (4) et présente au moins en partie une forme cylindrique creuse.

2. Agencement d'étanchéification selon la revendication 1, **caractérisé en ce que** l'adhésif (5) est pourvu de particules de matériau dur (6) ou de fibres de matériau dur afin d'augmenter la solidité mécanique de l'adhésif (5).

3. Agencement d'étanchéification selon la revendication 2, **caractérisé en ce que** les particules de matériau dur (6) se composent de diamant, de carbure de silicium (SiC), de corindon ou de nitrure de bore (CBN).

4. Agencement d'étanchéification selon la revendication 2, **caractérisé en ce que** les fibres de matériau dur sont des fibres de carbone ou des fibres de verre.

5. Agencement d'étanchéification selon l'une quelconque des revendications 1 à 4, **caractérisé en ce que** l'adhésif (5) est pourvu d'additifs qui abaissent le frottement de surface.

6. Agencement d'étanchéification selon la revendication 5, **caractérisé en ce qu'**au moins un additif est le polytétrafluoroéthylène ou présente ce composé.

7. Agencement d'étanchéification selon l'une quelconque des revendications 1 à 6, **caractérisé en ce qu'**il est réalisé sous forme de joint radial d'arbre.

8. Agencement d'étanchéification selon l'une quelconque des revendications 1 à 7, **caractérisé en ce que** le composant (4) est un arbre rotatif qui présente, au niveau du point de contact avec la lèvre d'étanchéité (3), une forme extérieure cylindrique.
